# EUROPÄISCHE PATENTSCHRIFT

(11) **EP 2 072 641 B1**
(45) Veröffentlichungstag und Bekanntmachung des Hinweises auf die Patenterteilung: **17.02.2016**
(21) Anmeldenummer: 07024925.5
(22) Anmeldetag: 21.12.2007
(51) Int. Cl.: C02F 1/461, C25B 11/04

(54) **Diamantelektrode und Verfahren zu ihrer Herstellung**
Diamond electrode and method for its production
Electrode de diamant et son procédé de fabrication

(43) Veröffentlichungstag der Anmeldung: 24.06.2009
(73) Patentinhaber: CONDIAS GMBH, 25524 Itzehoe (DE)
(72) Erfinder: Fryda, Dr. Matthias, 25524 Itzehoe (DE); Matthée, Dr. Thorsten, 25582 Hohenaspe (DE)
(74) Vertreter: Lins, Edgar

(56) Entgegenhaltungen:
- DE-A1-102006 035 854
- DE-A1-102006 036 084
- US-A- 5 900 127
- US-A1- 2005 014 066
- FRYDA M ET AL: "Fabrication and application of Diachem<(>R) electrodes" DIAMOND AND RELATED MATERIALS, ELSEVIER SCIENCE PUBLISHERS, AMSTERDAM, NL, Bd. 12, Nr. 10-11, 1. Oktober 2003 (2003-10-01), Seiten 1950-1956, XP004479890 ISSN: 0925-9635

## Beschreibung

Die Erfindung betrifft ein Verfahren zur Herstellung einer Diamantelektrode mit folgenden Verfahrensschritten:
- Aufrauung der Oberfläche des Elektrodenkörpers durch Sandstrahlen,
- Ätzen der aufgerauten Oberfläche und
- Aufbauen der Diamantschicht auf dem Elektrodenkörper.

Die Erfindung betrifft ferner eine nach diesem Verfahren hergestellte Diamantelektrode.

Diamantenelektroden haben sich wegen der mit ihnen generierbaren hohen Überspannung für zahlreiche elektrochemische Anwendungen bereits bewährt und lassen aufgrund ihrer überlegenen Eigenschaften Perspektiven für zahlreiche weitere Anwendungen erkennen.

Die Herstellung derartiger Diamantelektroden erfolgt in bekannter Weise dadurch, dass unter definierten Umgebungsbedingungen eine Diamantschicht auf einem metallischen Elektrodenkörper aufgebaut wird. Dabei besteht das Problem, dass für eine stabile Verbindung zwischen der Diamantschicht und dem Elektrodenkörper gesorgt werden muss. Um diese Verbindung zu verbessern, ist es bekannt, die Oberfläche des Elektrodenkörpers durch einen Sandstrahlvorgang mit Partikeln in der Größe von 20 bis 100 µm zu beschießen, um so eine in ihrer Topografie ungleichmäßige Oberfläche - und damit eine vergrößerte Kontaktfläche zu der Diamantschicht - zu erzeugen. Die dabei verwendeten Partikel können aus einem beliebigen, ausreichend harten Material gebildet sein, das mit dem Material des Elektrodenkörpers nicht reagiert. Ein bevorzugtes Material ist SiC.

Die Haftung der aufgebauten Diamantschicht auf dem Elektrodenkörper mit einer derart aufgerauten Oberfläche weist in manchen Anwendungsfällen dennoch nicht die gewünschte Stabilität auf. Insbesondere können Abplatzungen aus der Diamantschicht von dem Elektrodenkörper entstehen.

Durch Untersuchungen ist festgestellt worden, dass eine Ursache für die Abplatzungen darin besteht, dass bei dem Sandstrahlvorgang eine nicht unerhebliche Menge Sandstrahlpartikel mechanisch in der Oberfläche des Elektrodenkörpers verankert wird, sodass nach dem Sandstrahlen zwischen 10³ und 10⁴ Strahlpartikel in jedem Quadratzentimeter der Elektrodenoberfläche vorhanden sind. Die Strahlpartikel sind dabei mehr oder weniger fest in der Oberfläche verankert, wobei die lose verankerten Strahlpartikel eine Ursache für das Abplatzen der aufgebauten Diamantschicht darstellen können.

Es ist daher vorgeschlagen worden, die Oberfläche nach dem Sandstrahlen mit einem üblichen oxidativen Ätzmittel, wie Flusssäure (HF) oder Salpetersäure (HNO₃), zu ätzen. In der Tat ist es durch das Ätzen mit Flusssäure gelungen, die Strahlpartikelanzahl pro Quadratzentimeter Elektrodenoberfläche auf unter 5 zu verringern. Dennoch hat diese Maßnahme nicht zu verbesserten Diamantelektroden geführt. Zum einen bildet sich beim Ätzen ein Metalloxid, bei einem bevorzugt verwendeten Elektrodenkörper aus Niob also Nioboxid, das nur eine verschlechterte Haftung der Diamantschicht ermöglicht. Die beim Ätzen versprödete Elektrodenoberfläche führt ferner zu Enthaftungen der Diamantschicht. Derartige Offenbarungen finden sich in US 5,900,127, DE 10 2006 036 084 A1 und US 2005/0014066 A1.

Ein im Stand der Technik vorhandenes Problem besteht somit darin, dass ein großer Teil der hergestellten Diamantelektroden durch Abplatzungen der Diamantschicht unbrauchbar wird, sodass eine gewissenhafte Prüfung vorgenommen werden muss. Dies führt zu einer erheblichen Verteuerung der Diamantelektroden. Darüber hinaus müssen die Diamantelektroden sehr sorgfältig behandelt werden, da sie auch im Gebrauch zu Abplatzungen der Diamantschicht neigen.

Der vorliegenden Erfindung liegt daher die Aufgabe zugrunde, die Herstellung von Diamantelektroden so zu verbessern, dass eine verbesserte Haftung auf der Diamantschicht dem Elektrodenkörper gewährleistet ist, sodass die Fehlerrate bei der Herstellung der Diamantelektroden deutlich gesenkt werden kann und die Diamantelektroden im Gebrauch weniger empfindlich sind.

Zur Lösung dieser Aufgabe ist erfindungsgemäß ein Verfahren der eingangs erwähnten Art dadurch gekennzeichnet, dass ein nichtoxidatives Ätzen des Elektrodenkörpers mit konzentrierter Phosphorsäure (>70 %) bei einer Temperatur zwischen 140 und 180°C, vorzugsweise 150 bis 160°C so vorgenommen wird, dass ein Materialabtrag vom Material des Elektrodenkörpers unterhalb der aufgerauten Oberfläche um mehr als 5 µm erfolgt.

Das erfindungsgemäße Verfahren beruht auf durch umfangreiche Untersuchungen gewonnenen Erkenntnissen der Erfinder und auf Maßnahmen, die zu überraschenden Effekten geführt haben.

Die Durchführung eines nichtoxidativen Ätzverfahrens ist von der Fachwelt nicht als aussichtsreich angesehen worden. Die vorliegende Erfindung beruht auf der Erkenntnis, dass ein nichtoxidatives Ätzen an dem Elektrodenkörper erfolgreich sein kann, wenn die Ätzparameter in geeigneter Weise eingestellt werden. Dabei wird mit dem Ätzvorgang ein Materialabtrag vom Material des Elektrodenkörpers unterhalb der aufgerauten Oberfläche um mehr als 5 µm vorgenommen. Diese Maßnahme beruht auf der überraschenden Erkenntnis, dass für die Abplatzungen der Diamantschicht nicht in erster Linie die Verbindung zwischen der Diamantschicht und dem

Material des Elektrodenkörpers verantwortlich ist, sondern, dass diese Abplatzungen auf Materialschädigungen, insbesondere in Form von Rissen, zurückzuführen sind, die in dem massiven Material des Elektrodenkörpers beim Sandstrahlen aufgetreten sind, also unterhalb des Oberflächenbereichs, der durch das Sandstrahlen eine Berg- und Taltopografie erhalten hat. Für das Abplatzen der Diamantschicht sind zumindest auch Schädigungen des Materials des Elektrodenkörpers verantwortlich, die unterhalb der Talsohlen der durch Aufrauhungen entstandenen Topografie liegen. Beim erfindungsgemäßen Ätzvorgang erfolgt ein homogener Abtrag des Materials, sodass die aufgeraute Topografie weitgehend erhalten bleibt. Darüber hinaus wird das Material - auch im Talgrund der Topografie - um mehr als 5 µm, vorzugsweise um wenigstens 10 µm abgetragen, sodass vorhandene Schädigungen im Material, die sich bis in diese Tiefe erstrecken, beseitigt werden. Untersuchungen haben ergeben, dass die Schädigungen - abhängig von den Parametern der vorausgehenden Behandlungsschritten - bis maximal 10 µm in das massive Material hineinreichen, sodass durch einen Abtrag von ca. 10 µm im massiven Material die Schädigungen beseitigt werden. Da die Höhenunterschiede durch die aufgeraute Oberfläche (zwischen Bergspitze und Talboden) etwa 10 µm betragen und sich die Risse unter die Spitzen der Topografie erstrecken können, ergibt sich bei einer erfindungsgemäß eingestellten Ätzrate zwischen 5 und 15 µm, vorzugsweise von etwa 10 µm, eine Ätzdauer von etwa 1,5 bis 2,5 Stunden, wobei sich eine Ätzdauer von 2 Stunden in der Praxis bei einer Ätzrate von ca. 10 µm pro Stunde bewährt. Selbstverständlich hat auch das erfindungsgemäß durchgeführte nichtoxidative Ätzen den Effekt, dass in das Material des Elektrodenkörpers eingeschossene Sandstrahlpartikel vollständig oder fast vollständig entfernt werden und daher keine Ursache für Haftungsprobleme der Diamantschicht an dem Elektrodenkörper mehr bilden können.

Der erfindungsgemäße Ätzvorgang wird mit konzentrierter Phosphorsäure mit einer Konzentration >70 %, bevorzugt von 85 %, bei einer Temperatur zwischen 140 und 180°C vorgenommen. Ein bevorzugter Temperaturbereich ist 150 bis 160°C. Bei einer Temperatur von unter 140°C findet der Ätzvorgang nicht statt. Bei einer Temperatur von über 180°C wird in der Phosphorsäure enthaltenes Wasser zu schnell ausgetrieben, wodurch es zu einer Polymerisation der Phosphorsäure zu Polyphosphorsäure kommt und der Ätzvorgang stoppt.

Der Phosphorsäure werden bevorzugt Additive in Form von Komplexbildnern zugegeben. Geeignete Komplexbildner sind Zitronensäure und EDTA.

Es hat sich in der Praxis als zweckmäßig herausgestellt, während des Ätzvorganges konzentrierte Phosphorsäure nachzufüllen, um die gewählte Konzentration für den Ätzvorgang im Rahmen vorgegebener Toleranzen beizubehalten. Durch den Ätzvorgang wird Phosphorsäure verbraucht, sodass die Konzentration der Phosphorsäure während des Ätzvorganges über den sinnvollen Toleranzbereich hinaus verringern kann. Dem kann durch die Zugabe konzentrierter Phosphorsäure abgeholfen werden.

Der erfindungsgemäße Ätzvorgang kann im Batch-Verfahren, also mit einem geeigneten Ansatz des Ätzmittels, insbesondere Phosphorsäure, durchgeführt werden. Es ist auch möglich, den Ätzvorgang in einen kontinuierlichen Prozess einzubinden. In diesem Fall ist es erforderlich, die Säurekonzentration durch Nachfüllen von verdampfenden Wasser und Nachfüllen von verbrauchter Säure auf eine Sollkonzentration einzustellen. Darüber hinaus muss das geätzte Material abgeführt werden.

Als Elektrodenkörper für die erfindungsgemäß hergestellten Diamantelektroden werden vorzugsweise Elektrodenkörper aus reinem Niob verwendet. Geeignete Alternativen sind insbesondere Elektrodenkörper aus Tantal, Wolfram oder - eingeschränkt - Titan.

Die erfindungsgemäß hergestellten Diamantelektroden weisen eine wesentlich verbesserte Haftung der Diamantschicht auf dem Elektrodenkörper auf. Durch den erfindungsgemäß vorgesehenen Ätzvorgang ist der Elektrodenkörper der erfindungsgemäßen Diamantelektrode unterhalb der durch das Aufrauen gebildeten Topografie zumindest weitgehend frei von Zerrüttungen und Rissen, die beim Sandstrahlprozess entstanden sind.

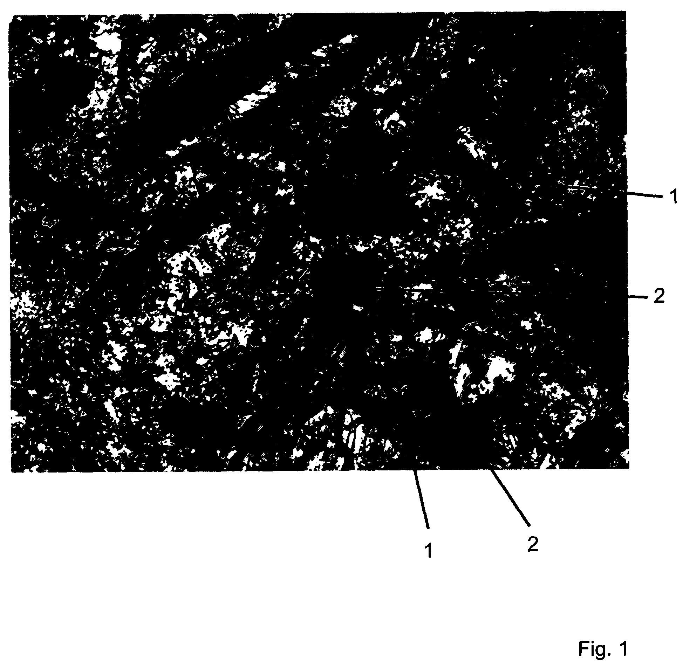

Figur 1 zeigt ein Rasterelektrodenmikroskopbild einer durch Sandstrahlen aufgerauten Oberfläche eines Niob-Elektrodenkörpers. Das Bild lässt erkennen, dass die Oberfläche Risse 1 aufweist und dass in der Oberfläche Sandstrahlpartikel 2 verankert sind. Die nach DIN ermittelten Rauheitswerte Rz und Ra liegen zwischen 15 µm und 25 µm (Rz) und zwischen 2 µm und 4 µm (Ra).

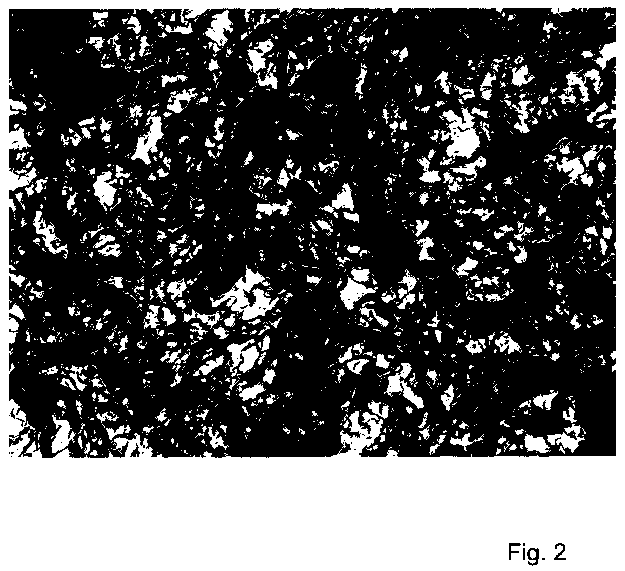

Figur 2 zeigt eine Rasterelektrodenmikroskopie-Aufnahme der Oberfläche gemäß Figur 1 nach dem erfindungsgemäßen Ätzvorgang. Es ist zu erkennen, dass die Oberfläche frei von Sandstrahlpartikeln und auch praktisch frei von Rissen 1 ist. Die Rauheitswerte haben sich für Rz nicht signifikant verändert. Der Wert für Ra kann sich um ca. 10 % durch den Ätzvorgang verringern. Es ist erkennbar, dass durch das Ätzen eine gerundete Topografie entstanden ist.

Die erfindungsgemäße Diamantelektrode unterscheidet sich dadurch von herkömmlichen Diamantelektroden und weist die oben beschriebenen deutlichen verbesserten Hafteigenschaften auf.

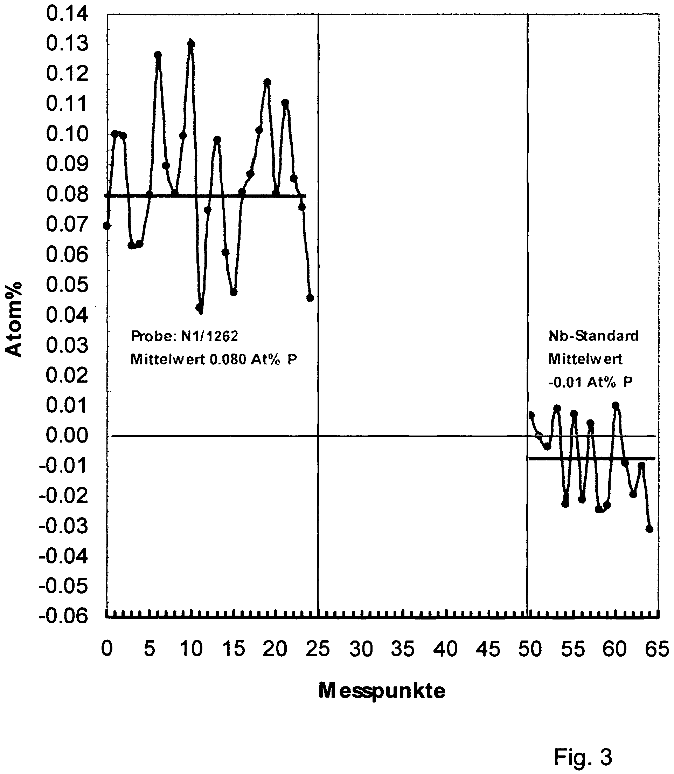

Die erfindungsgemäße Diamantelektrode enthält an der Oberfläche des Elektrodenkörpers eine Anreicherung des Ätzmittels. Figur 3 zeigt Analysenwerte für eine Analysentiefe von ca. 100 nm für den P-Gehalt in der Oberfläche des Elektrodenkörpers.

Im rechten Bereich der Figur 3 ist der Phosphorgehalt des unbehandelten Niob-Elektrodenkörpers dargestellt. Im Rahmen der Messunsicherheit ergibt sich eine praktisch phosphorfreie Oberfläche.

Demgegenüber weist mit Phosphorsäure erfindungsgemäß geätzte Oberfläche des Elektrodenkörpers einen deutlich erhöhten Phosphorgehalt auf, der im Mittel 0,08 Atom% beträgt.

## Patentansprüche

1. Verfahren zur Herstellung einer Diamantelektrode mit folgenden Verfahrensschritten:
- Aufrauung der Oberfläche des Elektrodenkörpers durch Sandstrahlen,
- Ätzen der aufgerauten Oberfläche und
- Aufbauen der Diamantschicht auf dem Elektrodenkörper,
**dadurch gekennzeichnet, dass** ein nichtoxidatives Ätzen des Elektrodenkörpers mit konzentrierter Phosphorsäure (>70 %) bei einer Temperatur zwischen 140 und 180°C, vorzugsweise 150 bis 160°C so vorgenommen wird, dass ein Materialabtrag vom Material des Elektrodenkörpers unterhalb der aufgerauten Oberfläche um mehr als 5 µm erfolgt.

2. Verfahren nach Anspruch 1, **dadurch gekennzeichnet, dass** das Ätzen mit einer Ätzrate zwischen 5 und 15 µm pro Stunde durchgeführt wird.

3. Verfahren nach Anspruch 1 oder 2, **dadurch gekennzeichnet, dass** eine 85 %ige Phosphorsäure verwendet wird.

4. Verfahren nach einem der Ansprüche 1 bis 3, **dadurch gekennzeichnet, dass** der Phosphorsäure Additive in Form von Komplexbildnern zugegeben werden.

5. Verfahren nach einem der Ansprüche 1 bis 4, **dadurch gekennzeichnet, dass** beim Ätzen ein Materialabtrag von 10 µm oder mehr, vorzugsweise zwischen 15 und 25 µm vorgenommen wird.

6. Verfahren nach einem der Ansprüche 1 bis 5, **dadurch gekennzeichnet, dass** das Ätzen über eine Dauer von mehr als 0,5 Stunde, vorzugsweise 1 Stunde oder mehr, insbesondere zwischen 1,5 und 2,5 Stunde, vorgenommen wird.

7. Verfahren nach einem der Ansprüche 1 bis 6, **dadurch gekennzeichnet, dass** während des Ätzvorganges konzentrierte Phosphorsäure nachgefüllt wird, um eine gewählte Konzentration für den Ätzvorgang im Rahmen vorgegebener Toleranzen beizubehalten.

8. Verfahren nach einem der Ansprüche 1 bis 7, **dadurch gekennzeichnet, dass** ein Elektrodenkörper aus reinem Niob verwendet wird.

9. Verfahren nach einem der Ansprüche 1 bis 7, **dadurch gekennzeichnet, dass** ein Elektrodenkörper aus Tantal, Wolfram oder Titan verwendet wird.

10. Diamantelektrode hergestellt nach einem Verfahren nach einem der Ansprüche 1 bis 9.

## Claims

1. Process for producing a diamond electrode, comprising the following process steps:
- roughening the surface of the electrode body by sand blasting,
- etching the roughened surface, and
- building up the diamond layer on the electrode body,
**characterized in that** non-oxidative etching of the electrode body is performed with concentrated phosphoric acid (> 70%) at a temperature of between 140 and 180°C, preferably between 150 and 160°C, in such a way that more than 5 µm of the material of the electrode body under the roughened surface is removed.

2. Process according to Claim 1, **characterized in that** the etching is carried out at an etching rate of between 5 and 15 µm per hour.

3. Process according to Claim 1 or 2, **characterized in that** an 85% strength phosphoric acid is used.

4. Process according to one of Claims 1 to 3, **characterized in that** additives in the form of complexing agents are added to the phosphoric acid.

5. Process according to one of Claims 1 to 4, **characterized in that** 10 µm or more, preferably between 15 and 25 µm, of material is removed during etching.

6. Process according to one of Claims 1 to 5, **characterized in that** the etching is performed over a period of more than 0.5 hour, preferably 1 hour or more, in particular between 1.5 and 2.5 hours.

7. Process according to one of Claims 1 to 6, **characterized in that** concentrated phosphoric acid is added during the etching process in order to maintain a selected concentration for the etching process within predetermined tolerances.

8. Process according to one of Claims 1 to 7, **characterized in that** an electrode body composed of pure niobium is used.

9. Process according to one of Claims 1 to 7, **characterized in that** an electrode body composed of tantalum, tungsten or titanium is used.

10. Diamond electrode produced by a process according to one of Claims 1 to 9.

## Revendications

1. Procédé pour la fabrication d'une électrode de diamant, comprenant les étapes suivantes consistant à :
- rendre rugueuse la surface du corps d'électrode par sablage,
- attaquer chimiquement la surface rugueuse, et
- constituer la couche de diamant sur le corps d'électrode,
**caractérisé en ce que** l'on exécute une attaque chimique non oxydante du corps d'électrode avec de l'acide phosphorique concentré (>70 %) à une température entre 140 et 180°C, de préférence 150 à 160°C, de telle façon qu'il se produit un enlèvement du matériau du corps d'électrode au-dessous de la surface rugueuse sur plus de 5 µm.

2. Procédé selon la revendication 1, **caractérisé en ce que** l'attaque chimique est exécutée avec une vitesse d'attaque entre 5 et 15 µm par heure.

3. Procédé selon la revendication 1 ou 2, **caractérisé en ce que** l'on utilise un acide phosphorique à 85 %.

4. Procédé selon l'une des revendications 1 à 3, **caractérisé en ce que** l'on ajoute à l'acide phosphorique des additifs sous la forme de formateurs de complexes.

5. Procédé selon l'une des revendications 1 à 4, **caractérisé en ce que** lors de l'attaque chimique, il se produit un enlèvement de matière de 10 µm ou plus, de préférence entre 15 et 25 µm.

6. Procédé selon l'une des revendications 1 à 5, **caractérisé en ce que** l'attaque chimique est exécutée sur une durée de plus de 0,5 heures, de préférence 1 heure ou plus, et en particulier entre 1,5 et 2,5 heures.

7. Procédé selon l'une des revendications 1 à 6, **caractérisé en ce que** pendant le processus d'attaque, on réalimente l'acide phosphorique concentré afin de conserver une concentration choisie pour l'opération d'attaque, dans le cadre de tolérances prédéterminées.

8. Procédé selon l'une des revendications 1 à 7, **caractérisé en ce que** l'on utilise un corps d'électrode en niobium pur.

9. Procédé selon l'une des revendications 1 à 7, **caractérisé en ce que** l'on utilise un corps d'électrode en tantale, en tungstène ou en titane.

10. Électrode de diamant fabriquée d'après un procédé selon l'une des revendications 1 à 9.
